# EUROPÄISCHE PATENTSCHRIFT

(11) **EP 3 682 367 B1**
(45) Veröffentlichungstag und Bekanntmachung des Hinweises auf die Patenterteilung: **09.11.2022**
(21) Anmeldenummer: 18778795.7
(22) Anmeldetag: 10.09.2018
(51) Int. Cl.: G06V 20/56, G06V 40/10, G06V 40/20

(54) **GESTENSTEUERUNG ZUR KOMMUNIKATION MIT EINEM AUTONOMEN FAHRZEUG AUF BASIS EINER EINFACHEN 2D KAMERA**
GESTURE CONTROL FOR COMMUNICATION WITH AN AUTONOMOUS VEHICLE ON THE BASIS OF A SIMPLE 2D CAMERA
COMMANDE GESTUELLE POUR LA COMMUNICATION AVEC UN VÉHICULE AUTONOME SUR LA BASE D'UNE SIMPLE CAMÉRA 2D

(30) Priorität: 11.09.2017 DE 102017216000
(43) Veröffentlichungstag der Anmeldung: 22.07.2020
(73) Patentinhaber: Continental Automotive Technologies GmbH, 30165 Hannover (DE)
(72) Erfinder: KRAFT, Erwin, 40631 Frankfurt (DE); HARICH, Nicolai, 90411 Nürnberg (DE); SEMMLER, Sascha, 89075 Ulm (DE); DREISEITEL, Pia, 65760 Eschborn (DE)
(74) Vertreter: Continental Corporation
(86) Internationale Anmeldenummer: PCT/DE2018/200085
(87) Internationale Veröffentlichungsnummer: WO 2019/048011

(56) Entgegenhaltungen:
- DE-A1-102013 207 223
- US-A1- 2013 230 211
- BOGO FEDERICA ET AL: "Keep It SMPL: Automatic Estimation of 3D Human Pose and Shape from a Single Image", 16. September 2016 (2016-09-16), INTERNATIONAL CONFERENCE ON SIMULATION, MODELING, AND PROGRAMMING FOR AUTONOMOUS ROBOTS,SIMPAR 2010; [LECTURE NOTES IN COMPUTER SCIENCE; LECT.NOTES COMPUTER], SPRINGER, BERLIN, HEIDELBERG, PAGE(S) 561 - 578, XP047355099, ISBN: 978-3-642-17318-9 [gefunden am 2016-09-16] das ganze Dokument
- ZHOU XIAOWEI ET AL: "Sparseness Meets Deepness: 3D Human Pose Estimation from Monocular Video", 2016 IEEE CONFERENCE ON COMPUTER VISION AND PATTERN RECOGNITION (CVPR), IEEE, 27. Juni 2016 (2016-06-27), Seiten 4966-4975, XP033021690, DOI: 10.1109/CVPR.2016.537 [gefunden am 2016-12-09]

## Beschreibung

Die Erfindung betrifft ein Verfahren und eine Vorrichtung zur Gestenerkennung mittels einer monokularen Kamera und kann insbesondere bei Fahrzeugkameras eines teilweise automatisiert fahrenden Fahrzeugs verwendet werden.

Zum Stand der Technik zur Detektion von Gesten zählt beispielsweise die 3D-Kamera Kinect. Für die meisten bekannten Verfahren bzw. Systeme werden 3D-Informationen (z.B. Kinect) benötigt, die eine Erkennung von Gesten ermöglichen.

Die Veröffentlichung Realtime Multi-Person 2D Pose Estimation using Part Affinity Fields von Cao et al. (https://arxiv.org/pdf/1611.08050.pdf , abgerufen am 11.09.2017) zeigt ein Verfahren zur 2D-Posenschätzung mehrerer Personen in einem Bild. Hierbei werden Körperteile, die zu einer Person gehören skelettähnlich miteinander verbunden. Damit wird eine Liste von Schlüsselpunkten (key points) erstellt, die über die die Zusammenhangskomponenten der Endoskelette erstellt werden.

DE 10 2014 207 802 B3 zeigt ein Verfahren und ein System zum proaktiven Erkennen einer Aktion eines Verkehrsteilnehmers im Straßenverkehr. Dabei werden mittels zumindest einer Kamera ein bildpunktweise strukturiertes Bild des Verkehrsteilnehmers (z.B. Fußgängers) erfasst und entsprechende Bilddaten erzeugt. Bilddaten mehrerer Bildpunkte werden jeweils zellenweise gruppiert, wobei das Bild mehrere Zellen umfasst. Anhand der Bilddaten innerhalb einer Zelle wird jeweils ein Schwerpunkt bestimmt. Zu jedem der Bildpunkte jeweils der Abstand zu den Schwerpunkten von einer Vielzahl der Zellen ermittelt, wobei anhand von Koordinaten des jeweiligen Bildpunkts und der Schwerpunkte ein dem Bildpunkt zugeordneter Eigenschafts-Vektor gebildet wird. Der Eigenschafts-Vektor wird mit mindestens einem Referenz-Vektorcluster verglichen und basierend auf dem Vergleich dem Verkehrsteilnehmer eine Pose zugeordnet, die repräsentativ dafür ist, dass der Verkehrsteilnehmer die Aktion ausführen wird. Es wird bei diesem Verfahren davon ausgegangen, dass anhand von Posen eines Verkehrsteilnehmers bereits dessen Absicht (z.B. Querungsabsicht am Zebrastreifen) vor der Ausführung der eigentlichen Aktion erkennbar ist. Auf Basis dieser Posenerkennung können dann ebenfalls proaktiv bereits vor dem Eintreten der Aktion Maßnahmen ergriffen werden wie beispielsweise eine akustische und/oder optische Warnung an den Fahrer und/oder an den messtechnisch erfassten Verkehrsteilnehmer ausgegeben werden und/oder ein steuernder Eingriff in ein Fahrzeugsystem wie beispielsweise in die Bremsen oder in die Lenkung erfolgen.

Eine Pose kann beispielsweise eine skelettartige, vereinfachte schematische Darstellung des Verkehrsteilnehmers bzw. Fußgängers zugeordnet werden. Die Pose kann wiederum einer zu erwartenden Aktion des Verkehrsteilnehmers zugeordnet sein, anhand der eine Verkehrssituation bewertet, eine etwaige Gefahr abgeleitet und ggf. weitere Steuerungsmaßnahmen ganz oder teilweise automatisch eingeleitet werden können. Beispielsweise kann eine teilweise gebückte Pose, in der ein Mensch typischerweise zu Rennen beginnt, im Straßenverkehr einer Gefahr zugeordnet werden, wenn die Pose in einer Orientierung "von vorne" erfasst wird, d. h. dass sich der Mensch auf das Fahrzeug zu bewegt.

Nachteilig an diesem Ansatz ist, dass die Bildung der Eigenschafts-Vektoren aufwendig ist.

US 2013/0230211 A1 zeigt eine Posenschätzung, die mannigfaltige 3D Körperhaltungen mittels eines Sekelettmodells schätzen kann. Aus einem Kamerabild wird eine Merkmalslokalisierung einer Person geschätzt. Anschließend wird eine Wahrscheinlichkeitskarte ermittelt, die die Sicherheit angibt, mit der andere als die geschätzte Merkmalslokalisierung der Person existiert. Hierauf wird eine Skelettmodelauswertung angewandt, um eine Kandidatengruppe von 2D-Skelettmodellen auszuwerten. Dabei wird jedes 2D-Skelettmodell zusammengesetzt aus einer Liniengruppe, die jede Lokalisierung repräsentiert und einer Punktgruppe, die Verbindungen zwischen jeder Lokalisierung repräsentiert. Ein 2D-Skelettmodell entspricht einer Körperhaltung der Person.

Ein zu lösendes Problem gegenüber dem Stand der Technik ist eine verbesserte Gestenerkennung auf der Grundlage von Bildern einer monokularen Kamera im Fahrzeug, auf der eine Steuerung von Fahrzeugfunktionen aufbauen kann.

Aspekte der Erfindung betreffen beispielsweise:
- Eine Gestensteuerung zur Einweisung eines Fahrzeuges z.B. Polizist auf der Straßenkreuzung (rechte Hand signalisiert nach rechts fahren)
- Eine Gestensteuerung zur Kommunikation mit einem autonomen Fahrzeug auf Basis einer einfachen 2D-Kamera
- Eine Überprüfung der Aufmerksamkeit von Teilnehmern im Straßenverkehr (Fußgänger, die beispielsweise durch Smartphones abgelenkt sind)

Ziel der Gesten- bzw. Posenerkennung ist es insbesondere, statische Posen (Gesten) einer Person auszuwerten. So kann man beispielsweise erkennen, ob eine Person den linken oder den rechten Arm hebt oder beide Arme ausbreitet.

Gelöst wird das Problem durch ein Verfahren und eine Vorrichtung gemäß den unabhängigen Patentansprüchen. Vorteilhafte Weiterbildungen sind Gegenstand der abhängigen Patentansprüche.

Der Lösungsansatz beruht darauf, auf Basis einer Skelettdarstellung, verschiedene Gesten zu beschreiben, diese einem Klassifikator zugänglich zu machen und anschließend in Bildern von Personen, diese Gesten zu erkennen.

Die Skelettdarstellung einer in einem Kamerabild abgebildeten Person kann insbesondere auf semantisch zugeordneten Objektteilen, z.B. Körperteilen einer Person, beruhen.

Ein erfindungsgemäßes Verfahren zur Erkennung von Gesten einer Person aus mindestens einem Bild einer monokularen Kamera, umfasst die Schritte:
a) Detektion von Schlüsselpunkten einer Person in dem mindestens einen Bild der monokularen Kamera,
b) Verbindung von Schlüsselpunkten zu einer skelettähnlichen Darstellung von Teilen der Person, wobei die skelettähnliche Darstellung die relative Position und Ausrichtung einzelner Körperteile der Person widerspiegelt,
c) Erkennung einer Geste aus der skelettähnlichen Darstellung der Person, und
d) Ausgabe der erkannten Geste.

Dazu liegt nach der Detektion von Schlüsselpunkten und deren Kombination zu Skeletten eine Liste von verbundenen Körperteilen, z.B. in Form einer Tabelle vor. Diese können vollständig, aber auch unvollständig sein (halbverdeckte Person). Es können also auch Körperteile fehlen.

Die skelettähnliche Darstellung spiegelt die relative Position und Ausrichtung einzelner Körperteile der Person wider, z.B. in Form einer Liste der miteinander verbundenen Schlüsselpunkte inkl. deren Position.

Die verschiedenen Schlüsselpunkte einer Person werden somit in eine robuste Darstellung überführt.

Dazu werden verschiedene Körperteile vorzugsweise in Gruppen aufgeteilt (z.B. Oberkörper mit Armen, Kopf mit linkem Arm, Kopf mit rechtem Arm, Kopf pur). Diese redundante Aufteilung macht das Verfahren sehr stabil gegenüber Teilverdeckungen der Person (Person hinter Auto nur als Oberkörper, Person hinter einer Litfasssäule als halbe Person vertikal).

Erfindungsgemäß werden Gruppen (von miteinander verbundenen Schlüsselpunkten) aus ein oder mehreren zusammengehörigen Körperteilen gebildet. Eine Gruppe entspricht beispielsweise einer Teil-Pose der Person bzw. einem Teil einer von der Person eingenommenen Geste.

Erfindungsgemäß ist ein Körperteil mehreren Gruppen zugehörig, z.B. kann eine erste Teil-Pose den Kopf und den linken Arm enthalten und eine zweite Teil-Pose den Kopf und den rechten Arm.

Die Anzahl der Gruppen bzw. Teil-Posen ist ein freier Parameter, der variabel eingestellt werden kann.

Die Kodierung der Schlüsselpunkte wird idealerweise in einen kompakten, semantisch interpretierbaren Merkmalsraum überführt, der z.B. über ein tiefes neuronales Netz ausgewertet wird. Erfindungsgemäß wird jeder Gruppe bzw. Teil-Pose ein Merkmals-Vektor zugeordnet . Die Merkmals-Vektoren basieren auf den Koordinaten der Schlüsselpunkte, die in dieser Gruppe zusammengefasst sind.

Erfindungsgemäß werden die Merkmals-Vektoren der Gruppen bzw. Teil-Posen mit Hilfe eines geclusterten Posen-Verzeichnisses (einem Posen-Wörterbuch), beispielsweise durch eine Aggregationsmethode, zu einem finalen Merkmals-Vektor zusammengefügt.

Bei dieser Aggregation kann man z.B. ein Histogramm über das Pose-Verzeichnis erzeugen oder aufsummierte Differenzen zwischen den einzelnen Cluster-Zentren des Posen-Verzeichnisses bilden. Das Posen-Verzeichnis selbst kann mit einem Clustering-Verfahren erzeugt werden, z.B. kNN Clustering, also Clustern unter Berücksichtigung der k nächsten Nachbarn, oder GMM Clustering, also Clustern mittels Gaussian Mixture Models.

Erfindungsgemäß wird der finale Merkmals-Vektor (zusammengesetzt aus den Merkmals-Vektoren der Teil-Posen) für die Klassifikation der Pose/Geste genutzt.

Vorzugsweise erfolgt eine Schätzung der Blickrichtung der Person basierend auf der skelettähnlichen Darstellung.

Bevorzugt kann überprüft werden, ob die Blickrichtung der Person zur monokularen Kamera gerichtet ist.

Vorteilhaft erfolgt die Erkennung der Geste durch eine Gestenklassifikation, die zuvor trainiert wurde. Als Klassifikationsverfahren kann ein geeignetes, an sich bekanntes Klassifikationsverfahren eingesetzt werden, z. B. SVM (Support Vector Machines) oder tiefe neuronale Netze.

Bevorzugt beträgt die Anzahl an Schlüsselpunkten, die einer Person zugeordnet sind, maximal 20.

Vorzugsweise wird eine Person, die den Kopf gesenkt hat und deren Blickrichtung zu einer Hand der Person geht, als abgelenkter Verkehrsteilnehmer klassifiziert.

Auf Grundlage der Gestenerkennung kann eine Gestensteuerung zur Kommunikation mit einem autonomen Fahrzeug aufgesetzt werden. Zur Kommunikation, z.B. mit dem Fahrzeugbesitzer oder einem zukünftigen Fahrgast eines autonom fahrenden Taxis ist Feedback seitens des Fahrzeugs erforderlich, damit die Person weiß, dass sie gesehen bzw. verstanden worden ist. Auf diese Weise ist eine Interaktion zwischen dem Fahrzeug und der Person möglich. Aber auch bei Warnungen, wenn eine Person auf die Straße läuft und eine Kollision mit dem Fahrzeug droht, kann eine Rückmeldung des Fahrzeugs an die Person hilfreich sein, dass das Fahrzeug die Person wahrgenommen hat und eine Kollision vermeiden wird.

Ein weiterer Gegenstand der Erfindung ist eine entsprechende Vorrichtung zur Erkennung von Gesten einer Person aus Bildern einer monokularen Kamera. Die Vorrichtung ist dazu konfiguriert,
a) Schlüsselpunkte einer Person in dem mindestens einen Bild der monokularen Kamera zu detektieren,
b) Schlüsselpunkte zu einer skelettähnlichen Darstellung von Teilen der Person zu verbinden, wobei die skelettähnliche Darstellung die relative Position und Ausrichtung einzelner Körperteile der Person widerspiegelt,
c) eine Geste aus der skelettähnlichen Darstellung der Person zu erkennen, und
d) ein die erkannte Geste repräsentierendes Ausgabesignal zu erzeugen und auszugeben.

Die Vorrichtung kann insbesondere einen Mikrocontroller oder - prozessor, einen Digital Signal Processor (DSP), einen ASIC (Application Specific Integrated Circuit), einen FPGA (Field Programmable Gate Array) und dergleichen mehr sowie Software zur Durchführung der entsprechenden Verfahrensschritte umfassen.

Die vorliegende Erfindung kann somit in digitalen elektronischen Schaltkreisen, Computer-Hardware, Firmware oder Software implementiert sein.

Die Vorrichtung kann insbesondere zusammen mit einer monokularen Kamera, z.B. Front-, Rückfahr- oder Seitenkamera in einem Fahrzeug angeordnet sein und betrieben werden.

Die Erfindung betrifft des Weiteren ein Fahrzeug mit einer monokularen Kamera und eine erfindungsgemäße Vorrichtung.

Im Folgenden werden Ausführungsbeispiele und Figuren näher erläutert.

Ein Ausführungsbeispiel einer Gestenerkennung nutzt hierzu einen zweistufigen Ansatz:

### 1. Detektion der Person

Die Personen auf dem Bild werden zunächst detektiert. Dabei kommt ein Personen-Detektor zum Einsatz. Vorteilhaft wird ein spezieller Detektor verwendet, der die einzelnen Körperteile einer Person findet und diese zu einem Skelett verbindet.

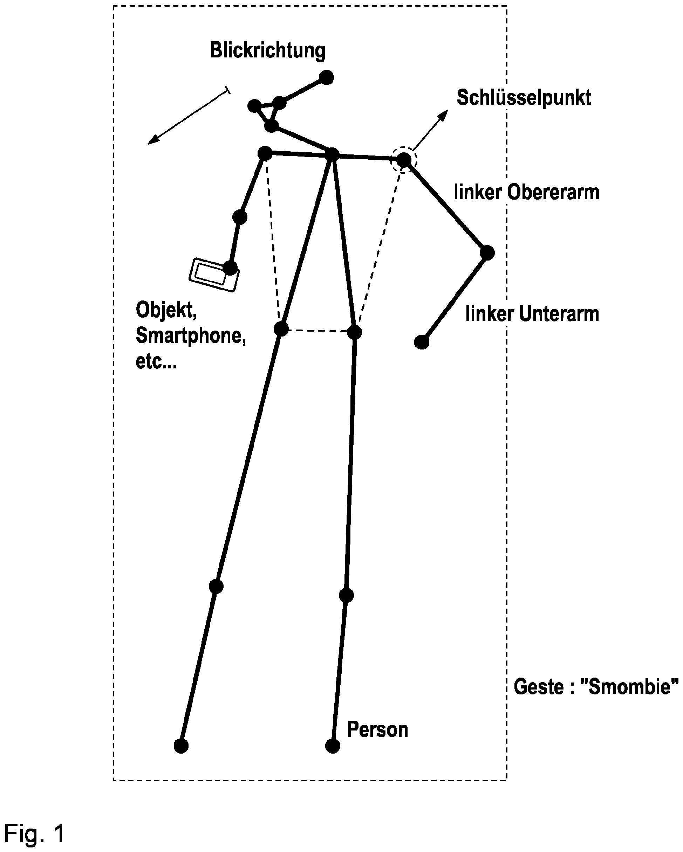

Die Figur 1 veranschaulicht exemplarisch eine Skelettdarstellung einer realen Person, die von einer Fahrzeugkamera abgebildet wurde. Aus dem Bild der Fahrzeugkamera wurden Schlüsselpunkte extrahiert und die Verbindung der Schlüsselpunkte ermittelt. Schlüsselpunkte sind z.B. Schultern, Halsansatz, Ellenbogen, Hand(-gelenke), Hüften, Knie, Sprunggelenke; Mund, rechtes und linkes Auge und der Scheitelpunkt des Kopfes.

Die Schlüsselpunkte werden derart durch Geraden miteinander verbunden, dass sie eine skelettähnliche Darstellung ergeben. Beispielsweise werden die Schlüsselpunkte des linken Handgelenks und Ellbogen der Person zum "linken Unterarm" "miteinander verbunden und die linke Schulter (markierter "Schlüsselpunkt" in der Figur) mit dem linken Ellbogen zum "linken Oberarm".

Das Clustern der Schlüsselpunkte kann z.B. über ein "gaussian Mixture Model" und eine Überführung der Personenteile in eine Fisher-Vector-Darstellung kann erfolgen. Ein Fisher-Vector kodiert damit nur Informationen einer einzelnen Person. Überlagernde Personen werden damit ausgeschlossen.

Über eine Tabelle werden die verschiedenen Teile der entsprechenden Person in Aktionsgruppen aufgeteilt, wie sie für eine spezielle Geste vorteilhaft sind. Diese Tabelle kann auch über ein Lernverfahren gelernt werden. In einem einfachen Fall (Unterscheidung relativ weniger Gesten), kann die Tabelle per Hand aufgestellt werden, wenn die Posen sehr klar verschiedenen Körperregionen zugeordnet werden können.

Die Blickrichtung der Person kann anhand der Schlüsselpunkte im Kopfbereich der Person geschätzt werden. Die Blickrichtung ist gesenkt und weist in Richtung der rechten Hand der Person. Daraus wird mit der Gestenerkennung erkannt, dass die Person vermutlich auf ein Objekt in ihrer Hand blickt und dem Verkehr aktuell keine Aufmerksamkeit schenkt. Aufgrund der Annahme, dass die Person auf Ihr Smartphone blickt, wird diese Geste als "Smombie", (Smartphone-Zombie) klassifiziert.

Diese Information wird von der Gestenerkennung an eine weitere Steuerungseinrichtung des Fahrzeugs übermittelt. Ein autonom fahrendes Fahrzeug kann nun bei seiner Fahrplanung berücksichtigen, dass dieser Fußgänger unaufmerksam ist und/oder eine Warnung an den Fußgänger ausgeben, falls er in Gefahr sein sollte.

### 2. Klassifikation der Geste bzw. Pose

Für jede Person werden Merkmals-Vektoren basierend auf den Koordinaten der Skelett- Verbindungspunkte (Schlüsselpunkte, Gelenke) erzeugt.

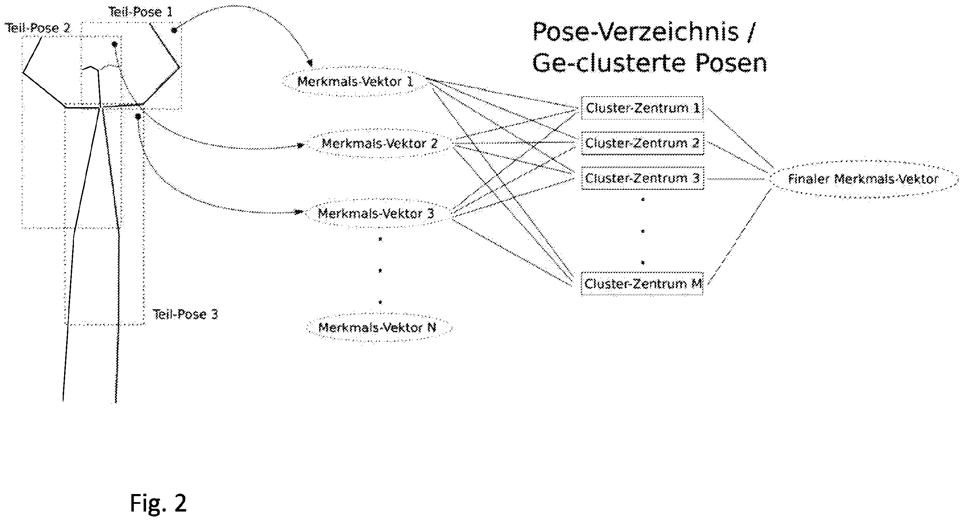

Fig. 2 veranschaulicht das Vorgehen zur Gestenklassifikation: Pro Person wird nicht nur ein Merkmals-Vektor verwendet, wie es herkömmlicherweise der Fall ist. Stattdessen wird für jede Person eine Menge von N Merkmals-Vektoren erzeugt, die auf unterschiedlichen Teil-Posen basieren. Eine dieser Teil-Posen kann z.B. nur den Kopf und den linken Arm beinhalten, eine andere den Kopf und den rechten Arm. Die Anzahl N dieser Teil-Posen ist ein freier Parameter, der variabel eingestellt werden kann.

Die Merkmals-Vektoren der Teil-Posen werden mit Hilfe eines ge-clusterten Pose-Verzeichnisses (Pose-Dictionary) zu einem finalen Merkmals-Vektor durch eine Aggregationsmethode zusammengefügt. Bei dieser Aggregation kann man z.B. ein Histogramm über das Pose-Verzeichnis erzeugen oder aufsummierte Differenzen zwischen den M Cluster-Zentren des Pose-Verzeichnisses bilden. Das Pose-Verzeichnis selbst wird mit einem Clustering-Verfahren erzeugt (z.B. kNN Clustering, also Clustern unter Berücksichtigung der k nächsten Nachbarn, oder GMM Clustering, also Clustern mittels Gaussian Mixture Models).

Der finale Merkmals-Vektor (zusammengesetzt aus den MerkmalsVektoren der Teil-Posen) wird für eine Klassifikation der Pose/Geste genutzt. Hierzu kann man ein beliebiges Klassifikationsverfahren nutzen, z.B. SVMs (Support Vector Machines) oder tiefe neuronale Netze.

Fig. 2 zeigt exemplarisch wie Merkmals-Vektoren der Teil-Posen mit Hilfe eines ge-clusterten Pose-Verzeichnisses (Pose-Dictionary) zu einem finalen Merkmals-Vektor durch eine Aggregationsmethode zusammengefügt werden.

Auf der linken Seite ist eine Skelettdarstellung vergleichbar der in Fig. 1 dargestellten zu sehen. Durchgezogene Geraden repräsentieren die Verbindung zwischen jeweils zwei zusammengehörigen Schlüsselpunkten, also die "Knochen" des Skeletts. Die Skelettdarstellung der gesamten Person wird in mehrere Teil-Posen 1, 2, 3, ..., N zerlegt, wobei die ersten drei Teil-Posen in Fig. 2 links als gestrichelte Rechtecke dargestellt sind. Teil-Pose 1 enthält hier z.B. den Kopf und den linken Arm der Person. Teil-Pose 2 enthält ebenfalls den Kopf, den rechten Arm und den Oberkörper der Person. In Teil-Pose 3 sind rechter und linker Oberarm, Oberkörper und Oberschenkel enthalten. Jeder Teil-Pose wird ein entsprechender Merkmalsvektor zugeordnet. Jeder Merkmalsvektor wird an ein (bzw. jedes) Cluster-Zentrum 1, 2, 3, ..., M des Posen-Verzeichnisses übermittelt. Das Posen-Verzeichnis gibt abschließend einen Finalen Merkmalsvektor aus, der für die Klassifikation der Pose bzw. Geste der Person genutzt wird.

In einem weiteren Ausführungsbeispiel wird mittels einer Gestenerkennung aus einer Folge von Bildern erkannt, dass eine Person in der Umgebung des Fahrzeugs winkt, anhand einer entsprechenden Bewegung eines Unterarms in der skelettähnlichen Darstellung. Das Fahrzeug mit der Kamera und der Gestenerkennung ist in diesem Beispiel ein autonom fahrendes Taxi. Bei dieser Geste ist es wichtig zu entscheiden, ob die Geste des Fußgängers für das Taxi gemeint ist. Auch hier ist eine Berücksichtigung der Blickrichtungsschätzung zielführend.

Ansonsten kann es passieren, dass das Taxi anhält, um den Fußgänger einsteigen zu lassen, obwohl dieser einem anderen Fußgänger gewunken hat. Oder es kann passieren, dass der Fußgänger ein vorausfahrendes autonomes Taxi zu sich gewunken hat und nun beide Taxis anhalten.

## Patentansprüche

1. Verfahren zur Erkennung von Gesten einer Person aus mindestens einem Bild einer monokularen Kamera, umfassend die Schritte:
a) Detektion von Schlüsselpunkten einer Person in dem mindestens einen Bild der monokularen Kamera,
b) Verbindung von Schlüsselpunkten zu einer skelettähnlichen Darstellung von Teilen der Person, wobei die skelettähnliche Darstellung die relative Position und Ausrichtung einzelner Körperteile der Person widerspiegelt,
wobei Gruppen aus ein oder mehreren zusammengehörigen Körperteilen gebildet werden und ein Körperteil mehreren Gruppen zugehörig ist,
wobei jeder Gruppe ein Merkmalsvektor zugeordnet wird, der auf Koordinaten der Schlüsselpunkte basiert, die in der jeweiligen Gruppe zusammengefasst sind,
wobei die Merkmalsvektoren der Gruppen einer Person mit Hilfe eines Posen-Verzeichnisses zu einem finalen Merkmalsvektor zusammengefügt werden,
c) Erkennung einer Geste aus der skelettähnlichen Darstellung der Person, wobei die Erkennung der Geste anhand einer Klassifikation des finalen Merkmalsvektors erfolgt und
d) Ausgabe der erkannten Geste.

2. Verfahren nach Anspruch 1, wobei die Anzahl N der Gruppen eingestellt wird.

3. Verfahren nach Anspruch 1 oder 2, wobei basierend auf der skelettähnlichen Darstellung eine Schätzung der Blickrichtung der Person erfolgt.

4. Verfahren nach Anspruch 3, wobei überprüft wird, ob die Blickrichtung der Person zur monokularen Kamera gerichtet ist.

5. Verfahren nach einem der vorherigen Ansprüche, wobei die Erkennung der Geste durch eine Gestenklassifikation, die zuvor trainiert wurde, erfolgt.

6. Verfahren nach einem der vorherigen Ansprüche, wobei die Anzahl an Schlüsselpunkten, die einer Person zugeordnet sind, maximal 20 beträgt.

7. Verfahren nach einem der Ansprüche 3 bis 6, wobei eine Person, die den Kopf gesenkt hat und deren Blickrichtung zu einer Hand der Person geht, als abgelenkter Verkehrsteilnehmer klassifiziert wird.

8. Vorrichtung zur Erkennung von Gesten einer Person aus Bildern einer monokularen Kamera, wobei die Vorrichtung dazu konfiguriert ist,
a) Schlüsselpunkte einer Person in dem mindestens einen Bild der monokularen Kamera zu detektieren,
b) Schlüsselpunkte zu einer skelettähnlichen Darstellung von Teilen der Person zu verbinden, wobei die skelettähnliche Darstellung die relative Position und Ausrichtung einzelner Körperteile der Person widerspiegelt,
wobei Gruppen aus ein oder mehreren zusammengehörigen Körperteilen gebildet werden und ein Körperteil mehreren Gruppen zugehörig ist,
wobei jeder Gruppe ein Merkmalsvektor zugeordnet wird, der auf Koordinaten der Schlüsselpunkte basiert, die in der jeweiligen Gruppe zusammengefasst sind,
wobei die Merkmalsvektoren der Gruppen einer Person mit Hilfe eines Posen-Verzeichnisses zu einem finalen Merkmalsvektor zusammengefügt werden,
c) eine Geste aus der skelettähnlichen Darstellung der Person zu erkennen, wobei die Erkennung der Geste anhand einer Klassifikation des finalen Merkmalsvektors erfolgt, und
d) ein die erkannte Geste repräsentierendes Ausgabesignal zu erzeugen und auszugeben.

9. Fahrzeug mit einer monokularen Kamera und einer Vorrichtung nach Anspruch 8.

## Claims

1. Method for recognizing gestures that are performed by a person from at least one image from a monocular camera, comprising the following steps:
a) detecting key points of a person in the at least one image from the monocular camera,
b) connecting key points to form a skeleton-like depiction of parts of the person, wherein the skeleton-like depiction reflects the relative position and orientation of individual body parts of the person,
wherein groups of one or more associated body parts are formed and a body part belongs to multiple groups,
wherein each group is assigned a feature vector that is based on coordinates of the key points that are combined in the respective group,
wherein the feature vectors of the groups of a person are combined with the aid of a pose directory to form a final feature vector,
c) recognizing a gesture from the skeleton-like depiction of the person, wherein the gesture is recognized on the basis of a classification of the final feature vector, and
d) outputting the identified gesture.

2. Method according to Claim 1, wherein the number N of groups is set.

3. Method according to Claim 1 or 2, wherein the gaze direction of the person is estimated based on the skeleton-like depiction.

4. Method according to Claim 3, wherein it is checked whether the gaze direction of the person is oriented towards the monocular camera.

5. Method according to one of the preceding claims, wherein the gesture is recognized through previously trained gesture classification.

6. Method according to one of the preceding claims, wherein the number of key points that are assigned to a person is at most 20.

7. Method according to one of Claims 3 to 6, wherein a person who has lowered their head and whose gaze direction is in the direction of a hand of the person is classified as a distracted road user.

8. Device for recognizing gestures that are performed by a person from images from a monocular camera, wherein the device is configured
a) to detect key points of a person in the at least one image from the monocular camera,
b) to connect key points to form a skeleton-like depiction of parts of the person, wherein the skeleton-like depiction reflects the relative position and orientation of individual body parts of the person,
wherein groups of one or more associated body parts are formed and a body part belongs to multiple groups,
wherein each group is assigned a feature vector that is based on coordinates of the key points that are combined in the respective group,
wherein the feature vectors of the groups of a person are combined with the aid of a pose directory to form a final feature vector,
c) to recognize a gesture from the skeleton-like depiction of the person, wherein the gesture is recognized on the basis of a classification of the final feature vector, and
d) to generate and to output an output signal representing the recognized gesture.

9. Vehicle having a monocular camera and a device according to Claim 8.

## Revendications

1. Procédé de reconnaissance de gestes d'une personne à partir d'au moins une image d'une caméra monoculaire, ledit procédé comprenant les étapes suivantes :
a) détecte des points clés d'une personne dans l'au moins une image de la caméra monoculaire,
b) relier les points clés pour former une représentation squelettique de parties de la personne, la représentation squelettique reflétant la position et l'orientation relatives des différentes parties du corps de la personne,
des groupes étant formés à partir d'une ou plusieurs parties du corps qui vont ensemble et une partie du corps appartenant à plusieurs groupes,
chaque groupe étant associé à un vecteur caractéristique qui est basé sur les coordonnées des points clés qui sont combinés dans le groupe respectif,
les vecteurs caractéristiques des groupes d'une personne étant assemblés pour former un vecteur caractéristique final à l'aide d'un répertoire de poses,
c) reconnaître un geste à partir de la représentation squelettique de la personne, le geste étant reconnu sur la base d'une classification du vecteur caractéristique final et
d) délivrer en sortie le geste reconnu.

2. Procédé selon la revendication 1, le nombre N de groupes étant défini.

3. Procédé selon la revendication 1 ou 2, une estimation de la direction d'observation de la personne étant effectuée sur la base de la représentation squelettique.

4. Procédé selon la revendication 3, une vérification étant effectuer pour savoir si la direction d'observation de la personne est orientée vers la caméra monoculaire.

5. Procédé selon l'une des revendications précédentes, la reconnaissance du geste étant effectuée par une classification de gestes qui a été préalablement soumise à un apprentissage.

6. Procédé selon l'une des revendications précédentes, le nombre de points clés associés à une personne étant de 20 maximum.

7. Procédé selon l'une des revendications 3 à 6, une personne qui a la tête baissée et dont la direction d'observation est orientée vers une main de la personne est classée comme usager de la route distrait.

8. Dispositif de reconnaissance de gestes d'une personne à partir d'images d'une caméra monoculaire, le dispositif étant configuré pour
a) détecter des points clés d'une personne dans l'au moins une image de la caméra monoculaire,
b) relier les points clés pour former une représentation squelettique de parties de la personne, la représentation squelettique reflétant la position et l'orientation relatives de différentes parties du corps de la personne,
des groupes étant formés à partir d'une ou plusieurs parties du corps qui vont ensemble et une partie du corps appartenant à plusieurs groupes,
chaque groupe étant associé à un vecteur caractéristique qui est basé sur les coordonnées des points clés qui sont combinés dans le groupe respectif,
les vecteurs caractéristiques des groupes d'une personne étant assemblés en un vecteur caractéristique final à l'aide d'un répertoire de poses,
c) reconnaître un geste à partir de la représentation squelettique de la personne, le geste étant reconnu sur la base d'une classification du vecteur caractéristique final, et
d) générer et délivrer en sortie un signal de sortie représentant le geste reconnu.

9. Véhicule comprenant une caméra monoculaire et un dispositif selon la revendication 8.
